(19) Europäisches Patentamt

European Patent Office

Office européen des brevets

(11) **EP 1 055 691 B1**

(12) **EUROPÄISCHE PATENTSCHRIFT**

(45) Veröffentlichungstag und Bekanntmachung des Hinweises auf die Patenterteilung:
**09.04.2003  Patentblatt 2003/15**

(51) Int Cl.7: **C08G 18/08**, C08G 18/66

(21) Anmeldenummer: **00110186.4**

(22) Anmeldetag: **15.05.2000**

(54) **Verfahren zur kontinuierlichen Herstellung von thermoplastisch verarbeitbaren Polyurethanen**

Method for the continous preparation of thermoplastically processible polyurethanes

Méthode de fabrication en continu de polyuréthanes façonnables sous forme thermoplastique

(84) Benannte Vertragsstaaten:
**AT BE CH CY DE DK ES FI FR GB GR IE IT LI LU MC NL PT SE**

(30) Priorität: **26.05.1999  DE 19924089**

(43) Veröffentlichungstag der Anmeldung:
**29.11.2000  Patentblatt 2000/48**

(73) Patentinhaber: **Bayer Aktiengesellschaft
51368 Leverkusen (DE)**

(72) Erfinder:
• **Kaufhold, Wolfgang, Dr.
51061 Köln (DE)**
• **Bräuer, Wolfgang, Dr.
51375 Leverkusen (DE)**
• **Liesenfelder, Ulrich
51469 Bergisch Gladbach (DE)**
• **Heidingsfeld, Herbert
50226 Frechen (DE)**
• **Röhrig, Wolfgang
51467 Bergisch Gladbach (DE)**
• **Hoppe, Hans-Georg
42799 Leichlingen (DE)**

(56) Entgegenhaltungen:
**EP-A- 0 747 409          DE-A- 2 059 570
DE-A- 2 823 762**

## Beschreibung

Die Erfindung betrifft ein Verfahren zur kontinuierlichen Herstellung von thermoplastisch verarbeitbaren Polyurethanen in einem Statikmischer mit verbessertem Erweichungsverhalten.

Thermoplastische Polyurethan-Elastomere (TPU) sind seit langem bekannt. Sie sind aufgrund der Kombination hochwertiger mechanischer Eigenschaften mit den bekannten Vorteilen der kostengünstigen thermoplastischen Verarbeitbarkeit von technischer Bedeutung. Durch die Verwendung unterschiedlicher chemischer Aufbaukomponenten lässt sich eine große Variationsbreite mechanischer Eigenschaften erzielen. Eine Übersicht über TPUs, ihre Eigenschaften und Anwendungen wird z.B. in Kunststoffe 68 (1978), Seiten 819 bis 825 oder Kautschuk, Gummi, Kunststoffe 35 (1982), Seiten 568 bis 584 gegeben.

TPUs werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte im Bereich von 70 Shore A bis 75 Shore D.

Der Aufbau der thermoplastisch verarbeitbaren Polyurethanelastomere kann entweder schrittweise (Prepolymerdosierverfahren) oder durch die gleichzeitige Reaktion aller Komponenten in einer Stufe (one-shot-Dosierverfahren) erfolgen.

Die TPUs können kontinuierlich oder diskontinuierlich hergestellt werden. Die bekanntesten technischen Herstellverfahren sind das Bandverfahren (GB-A 1 057 018) und das Extruderverfahren (DE-A 19 64 834, DE-A 23 02 564 und DE-A 20 59 570). Beim Extruderverfahren werden die Ausgangsstoffe in einen Schneckenreaktor dosiert, dort polyaddiert und in eine gleichmäßige Granulatform überführt. Das Extruderverfahren ist vergleichsweise einfach, hat aber den Nachteil, dass die Homogenität der so hergestellten Produkte aufgrund des gleichzeitigen Ablaufs von Mischen und Reaktion für viele Anwendungen nicht ausreichend ist. Zusätzlich ist das Erweichungsverhalten der TPUs und das der daraus hergestellten Formkörper beschränkt. Leicht aufschmelzende TPUs, wie sie z.B. für Schmelzfolien oder Sinterprodukte eingesetzt werden, lassen sich nach diesem Verfahren nicht oder nur eingeschränkt herstellen.

Aus der Literatur sind ferner Herstellungsverfahren bekannt, bei denen die Ausgangsstoffe zunächst in einer Mischzone bei niedrigen Temperaturen, bei denen keine Polyaddition eintritt, gemischt werden und anschließend in einer Reaktionszone, die die gewünschte Reaktionstemperatur aufweist, miteinander reagieren. Die Misch- und Reaktionszone werden vorzugsweise als Statikmischer ausgebildet.

In DE-A 28 23 762 werden nach dem "One-shot-Verfahren" homogene Produkte erhalten. In EP-A 747 409 dosiert man nach dem Prepolymerverfahren und erhält homogene TPUs mit verbesserten mechanischen Eigenschaften.

Aufgabe war es daher, ein einfaches Verfahren zur Verfügung zu stellen, mit dem es möglich ist, homogene TPUs mit verbessertem Erweichungsverhalten kostengünstig und technisch einfach herzustellen.

Diese Aufgabe konnte überraschend dadurch gelöst werden, dass TPUs kontinuierlich in einem Statikmischer, in dem im "One-shot-Dosierverfahren" die gesamte TPU-Reaktion im wesentlichen durchgeführt wird, unter speziellen Verfahrensbedingungen hergestellt werden. Mit diesem Verfahren werden homogene und deutlich besser aufschmelzbare TPU-Produkte erhalten.

Gegenstand der Erfindung ist ein Verfahren zur kontinuierlichen Herstellung von thermoplastisch verarbeitbaren homogenen Polyurethanelastomeren mit verbessertem Erweichungsverhalten, bei dem

ein oder mehrere Polyisocyanate (A) und

eine zerewitinoffaktive Wasserstoffatome aufweisende Mischung (B) aus

B1) 1 bis 85 Äquivalent-%, bezogen auf die Isocyanatgruppen in (A), einer oder mehrerer Verbindungen mit im Mittel mindestens 1,8 und höchstens 2,2 zerewitinoffaktiven Wasserstoffatomen pro Molekül und einem mittleren Molekulargewicht $\overline{M}_n$ von 450 bis 5000 g/mol,

B2) 15 bis 99 Äquivalent-%, bezogen auf die Isocyanatgruppen in (A), einer oder mehrerer Kettenverlängerungsmittel mit im Mittel mindestens 1,8 und höchstens 2,2 zerewitinoffaktiven Wasserstoffatomen pro Molekül und einem Molekulargewicht von 60 bis 400 g/mol, sowie

0-20 Gew.-%, bezogen auf die Gesamtmenge an TPU, weiterer Hilfs- und Zusatzstoffe (C),

wobei die Komponenten A) und B) in einem NCO:OH-Verhältnis von 0,9 : 1 bis 1,1 : 1 eingesetzt werden,

in einem Statikmischer mit einer Scherrate von >500 sec$^{-1}$ und <50 000 sec$^{-1}$ innerhalb von maximal 1 Sekunde homogen vermischt werden, die so hergestellte Reaktionsmischung, gegebenenfalls über einen zweiten Statikmischer, in einen Extruder dosiert wird und gegebenenfalls Hilfsstoffe und/oder weitere Komponenten eingemischt werden, dadurch gekennzeichnet, dass das Polyisocyanat (A) und die Mischung (B) jeweils eine Temperatur von >170°C und <250°C aufweisen, die Reaktion im wesentlichen im ersten Statikmischer mit einem Umsatz >90%, bezogen auf Komponente A), stattfindet und die Reaktionsmischung den ersten Statikmischer mit einer Temperatur >240°C und <350°C verlässt.

Als organische Polyisocyanate (A) kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie Hexamethylendiisocyanat, cycloaliphatische Diisocyanate, wie Isophorondiisocyanat, 1,4-Cyclohexan-diisocyanat, 1-Methyl-2,4- und -2,6-cyclohexandiisocyanat sowie die entsprechenden Isomerengemische, 4,4'-, 2,4'- und 2,2'-Dicyclohexylmethan-diisocyanat sowie die entsprechenden Isomerengemische und aromatische Diisocyanate, wie 2,4-Toluylendiisocyanat, Gemische aus 2,4- und 2,6-Toluylendiisocyanat, 4,4'-Diphenylmethandiisocyanat, 2,4'- Diphenylmethandiisocyanat und 2,2'-Diphenylmethandiisocyanat, Gemische aus 2,4'- Diphenylmethandiisocyanat und 4,4'-Diphenylmethandiisocyanat, urethanmodifizierte flüssige 4,4'-Diphenylmethandiisocyanate und/oder 2,4'-Diphenylmethandiisocyanate, 4,4'-Diisocyanatodiphenyl-ethan-(1,2) und 1,5-Naphthylendiisocyanat. Vorzugsweise verwendet werden Diphenylmethandiisocyanat-Isomerengemische mit einem 4,4'-Diphenylmethandiisocyanatgehalt von größer als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 % (berechnet auf Gesamt-Diisocyanat), aber höchstens soviel eines Polyisocyanates, dass ein thermoplastisch verarbeitbares Produkt entsteht, verwendet werden. Beispiele sind Triphenylmethan-4,4',4"-triisocyanat und Polyphenylpolymethylen-polyisocyanate.

Als Komponente B1) werden lineare hydroxylterminierte Polyole mit im Mittel 1,8 bis 3,0, bevorzugt bis 2,2 zerewitinoff-aktiven Wasserstoffatomen pro Molekül und mit einem Molekulargewicht von 450 bis 5000 g/mol eingesetzt. Produktionsbedingt enthalten diese oft kleine Mengen an nichtlinearen Verbindungen. Häufig spricht man daher auch von "im wesentlichen linearen Polyolen". Bevorzugt sind Polyester-, Polyether-, Polycarbonat-Diole oder Gemische aus diesen.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.% bezogen auf die bifunktionellen Polyether eingesetzt werden, jedoch höchstens in solcher Menge, dass ein thermoplastisch verarbeitbares Produkt entsteht . Die im wesentlichen linearen Polyether-Diole haben vorzugsweise Molekulargewichte von 450 bis 5000 g/mol. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoff-atomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder gegebenenfalls in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol und/oder 1,6-Hexandiol, Kondensationsprodukte von $\omega$-Hydroxycarbonsäuren, beispielsweise $\omega$-Hydroxycapronsäure und vorzugsweise Polymerisationsprodukte von Lactonen, beispielsweise gegebenenfalls substituierten $\omega$-Caprolactonen. Als Polyester-Diole vorzugsweise verwendet werden Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Poly-caprolactone. Die Polyester-Diole besitzen Molekulargewichte von 450 bis 5000 g/mol und können einzeln oder in Form von Mischungen untereinander zur Anwendung kommen.

Als Komponente B2) werden Diole oder Diamine mit im Mittel 1,8 bis 3,0,bevorzugt 2,2 zerewitinoff-aktiven Wasserstoffatomen pro Molekül und einem Molekulargewicht von 60 bis 400 g/mol eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Geeignet sind jedoch auch Diester der Terephthalsäure mit Glykolen mit 2 bis 4 Kohlenstoff-atomen, wie z.B. Terephthalsäure-bis-ethylenglykol oder Terephthalsäure-bis-1,4-butandiol, Hydroxyalkylenether des Hydrochinons, wie z.B. 1,4-Di($\beta$-hydroxyethyl)-hydrochinon, ethoxylierte Bisphenole, wie z.B. 1,4-Di($\beta$-hydroxyethyl)-bisphenol A, (cyclo)aliphatische Diamine, wie z.B. Isophorondiamin, Ethylendiamin, 1,2-Propylen-diamin, 1,3-Propylen-diamin, N-Methyl-propylen-1,3-diamin, N,N'-Dimethyl-ethylendiamin und aromatische Diamine, wie z.B. 2,4-Toluylen-diamin und 2,6-Toluylen-diamin, 3,5-Diethyl-2,4-toluylen-diamin und/oder 3,5-Diethyl-2,6-toluylen-diamin und primäre mono-, di-, tri- und/oder tetraalkylsubstituierte 4,4'-Diaminodiphenylmethane. Es können auch Gemische der oben genannten Kettenverlängerer eingesetzt werden. Daneben können auch kleinere Mengen an Triolen zugesetzt werden.

Weiterhin können in geringen Mengen auch übliche monofunktionelle Verbindungen, z. B. als Kettenabbrecher oder Entformungshilfen, eingesetzt werden. Beispielhaft genannt seien Alkohole wie Oktanol und Stearylalkohol oder Amine wie Butylamin und Stearylamin.

Zur Herstellung der TPUs können die Aufbaukomponenten, gegebenenfalls in Gegenwart von Katalysatoren, Hilfsmitteln und/oder Zusatzstoffen vorzugsweise in solchen Mengen zur Reaktion gebracht werden, dass das Äquivalenzverhältnis von NCO-Gruppen A) zur Summe der NCO-reaktiven Gruppen, insbesondere der OH-Gruppen der niedermolekularen Diole/Triole B2) und Polyole B1) 0,9:1,0 bis 1,1:1,0, vorzugsweise 0,95:1,0 bis 1,10:1,0 beträgt.

Geeignete erfindungsgemäße Katalysatoren sind die nach dem Stand der Technik bekannten und üblichen tertiären Amine, wie z.B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und/oder Zinnverbindungen.

Neben den TPU-Komponenten und den Katalysatoren können auch Hilfsmittel und/oder Zusatzstoffe (C) bis zu 20 Gew.%, bezogen auf die Gesamtmenge TPU, zugesetzt werden. Sie können in einer der TPU-Komponenten, vorzugsweise in der Komponente B1), vorgelöst werden oder auch ggf. nach erfolgter Reaktion in einem nachgeschalteten Mischaggragat, wie z.B. einem Extruder, zudosiert werden.

Genannt seien beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe wie z.B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere, insbesondere ABS. Ebenfalls können andere Elastomere wie Kautschuk, Ethylen/Vinylacetatcopolymere, Styrol/Butadiencopolymere sowie andere TPU's verwendet werden. Weiterhin zur Einarbeitung geeignet sind handelsübliche Weichmacher wie Phosphate, Phthalate, Adipate, Sebacate und Alkylsulfonsäureester.

Das erfindungsgemäße Herstellverfahren wird wie folgt ausgeführt:

Die Komponenten A) und B) werden getrennt voneinander, vorzugsweise in einem Wärmetauscher, auf eine Temperatur zwischen 170° und 250°C erwärmt und in flüssiger Form gleichzeitig kontinuierlich in einen Statikmischer mit einem bevorzugten Länge/Durchmesser-Verhältnis von 5:1 bis 20:1, besonders bevorzugt 8:1 bis 14:1, dosiert.

Die Komponenten werden dort homogen mit einer Scherrate 500 bis 50000 sec$^{-1}$ vermischt und zur Reaktion gebracht. Eine homogene Durchmischung im Sinne der Erfindung bedeutet, dass die Konzentrationsverteilung der Komponenten und des Reaktionsproduktes in der Mischung eine relative Standardabweichung von weniger als 5 % aufweist. Die Verweilzeit im Statikmischer beträgt maximal 1 sec.

Der Statikmischer ist isoliert oder vorzugsweise auf 200° bis 260°C beheizt. Erfindungsgemäß einsetzbare Statikmischer sind in Chem.-Ing. Techn. 52, Nr. 4, Seite 285 bis 291 sowie in "Mischen von Kunststoff und Kautschukprodukten", VDI-Verlag, Düsseldorf 1993, beschrieben. Beispielhaft seien SMX-Statikmischer der Firma Sulzer erwähnt.

Erfindungsgemäß wird in diesem Statikmischer ein Umsatz >90 %, bezogen auf die Einsatzkomponente A), erreicht und das Reaktionsgemisch hat beim Verlassen des Statikmischers eine Temperatur >240°C und <350°C.

In einer besonderen Ausführungsform wird die Reaktionsmischung, gegebenenfalls über einen zweiten Statikmischer, direkt in einen kontinuierlich arbeitenden Kneter und/oder Extruder (z.B. ein Zweiwellenkneter ZSK) dosiert, wo man bei Temperaturen von 120 bis 250°C zusätzliche Hilfsstoffe in das TPU einmischen kann.

Im zweiten Statikmischer, soweit vorhanden, findet erfindungsgemäß eine Reaktion nur noch in einem sehr geringen Maße (< 10 % bezogen auf Einsatzkomponente A)) statt. Am Ende des Extruders wird granuliert.

Das nach dem erfindungsgemäßen Verfahren hergestellte TPU kann zu Spritzgießartikeln, Extrusionsartikeln, insbesondere zu Schmelz-Folien, zu Beschichtungsmassen bzw. Sintertypen und zu leicht schmelzenden Coextrusionstypen, wie z.B. Kaschierungen, Kalandrierungen und Powder-slush-Typen verarbeitet werden. Bei guter Homogenität zeichnet es sich, wie auch die daraus hergestellten Formkörper, vor allem durch eine niedrige Erweichungstemperatur aus.

Die Erfindung soll anhand der nachfolgenden Beispiele näher erläutert werden.

**Beispiele**

| TPU-Rezeptur: | |
|---|---|
| Poly-butandiol-1,4-adipat (Molekulargewicht ca. 820) | 54 Gew.-Teile |
| Butandiol-1,4 | 7,4 Gew.-Teile |
| 4,4'-Diphenylmethandiisocyanat | 37 Gew.-Teile |
| Ethylen-bis-stearylamid | 0,2 Gew.-Teile |
| Zinndioctoat | 200 ppm |

**Beispiel 1**

(nicht erfindungsgemäßes ZSK-Verfahren (Vergleichsbeispiel)):

Der Polyester, in dem 200 ppm (bezogen auf Polyester) Zinndioctoat als Katalysator gelöst waren, wurde mit dem Butandiol auf 145°C erhitzt und kontinuierlich in das erste Gehäuse einer ZSK 83 (Firma Werner/Pfleiderer) dosiert. In das gleiche Gehäuse wurden 4,4'-Diphenylmethandiisocyanat (130°C) und Ethylen-bis-stearylamid dosiert. Die ersten 9 Gehäuse der ZSK waren nicht beheizt (quasi-adiabatisch). Durch die freiwerdende Reaktionswärme erreichte man Temperaturen bis zu 240°C. Die letzten 4 Gehäuse wurden gekühlt. Die Drehzahl der Schnecke betrug 270 U/min.

Am Ende der Schnecke wurde die heiße Schmelze als Strang abgezogen, im Wasserbad gekühlt und granuliert.

Die Ergebnisse der jeweiligen Produktprüfung sind in der Tabelle angegeben.

**Beispiele 2 bis 7**

(Statikmischer-Extruder-Verfahren):

Die obige Polyester-Butandiol-Mischung mit dem Zinndioctoat wurde kontinuierlich in einen SMX-Statikmischer[1)] der Firma Sulzer dosiert.

| [1)] | DN18 | Länge 185 mm | Durchmesser 18 mm |
|---|---|---|---|
| | DN 32 | Länge 500 mm | Durchmesser 32 mm |
| | DN4 | Länge 38 mm | Durchmesser 4 mm |

Gleichzeitig pumpte man kontinuierlich das 4,4'-Diphenylmethandiisocyanat in den Statikmischer.

Das entstandene TPU wurde direkt in die erste Einspeisestelle (Gehäuse 1) eines Extruders [2)] dosiert.

| [2)] | ZSK 83 | (Firma Werner/Pfleiderer) |
|---|---|---|
| | Welding 3500 (3,5 Dual Worm; Firma Welding Engineers) | |
| | Continua 37 | (Firma Werner/Pfleiderer) |

In das gleiche Gehäuse dosierte man das Ethylen-bis-stearylamid.

Die Einstellung der ZSK-Parameter war analog Beispiel 1. Die quasi-adiabatische Gehäuse-Temperatur-Einstellung zeigte, dass bei Vergleichsbeispiel 2 in der ZSK Reaktionswärme frei wurde; bei den Beispielen 3 und 7 wurde keine Reaktionswärme frei.

Das bedeutet, dass nur bei Vergleichsbeispiel 2 ein wesentlicher Teil der Reaktion nicht im Statikmischer, sondern im Extruder stattfand.

Die zwei Zonen des Welding-Extruders wurden mit 180°C beheizt. Die Drehzahl betrug 110 U/min.

Der Continua-Extruder wurde mit 200°C beheizt. Die Drehzahl betrug 100 U/min.

Am Ende der Extruder wurde die heiße Schmelze als Strang abgezogen, im Wasserbad gekühlt und granuliert.

**Blasfolienherstellung**

aus den TPUs der Beispiele 1 bis 7

Das jeweilige TPU-Granulat wurde in einem Einwellen-Extruder 30/25D Plasticorder PL 2000-6 der Firma Brabender aufgeschmolzen (Dosierung 3 kg/h; 185 bis 205°C) und durch einen Folienblaskopf zu einer Schlauchfolie extrudiert.

**Herstellung der Spritzgießkörper**

aus den TPUs der Beispiele 1 bis 7

Das jeweilige TPU-Granulat wurde in einer Spritzgießmaschine D 60 (32er Schnecke) der Firma Mannesmann aufgeschmolzen (Massetemperatur ca. 225°C) und zu Platten geformt (125 mm x 50 mm x 2 mm).

**Dynamisch-mechanische Analyse (DMA) über die Temperatur**

Von den Produkten wurde jeweils eine dynamisch-mechanische Messung eines aus der Spritzgießplatte gestanzten Prüfkörpers (50 mm x 12 mm x 2 mm) im Torsionsschwingversuch über die Temperatur analog DIN 53 445 durchgeführt.

Die Messungen wurden mit dem RDA 700 der Firma Rheometrics mit 1 Hz im Temperaturbereich von -125°C bis 200°C mit einer Heizrate von 1°C/min durchgeführt. Zur Charakterisierung des erfindungsgemäßen Erweichungsverhaltens ist in der folgenden Tabelle die Temperatur angegeben, bei der der Speichermodul G' den Wert 1 MPa erreicht (die Erweichungstemperatur).

**Mechanische Prüfung bei Raumtemperatur**

Der Modul bei 100 % Dehnung wurde an den Spritzgießprüfkörpern nach DIN 53 405 gemessen.

**Ergebnisse:**

| Bei-spiel | Statikmischer/ Extruder | Durchsatz [g/min] | Scherrate im Statikmischer [sec$^{-1}$] | Verweilzeit im Statikmischer [sec] | Temperatur der Komponenten A)/B) [°C] | Temperatur am Ende des Statikmischers 1 [°C] | 100 %-Modul [MPa] | Erweichungs-temperatur DMA [°C] |
|---|---|---|---|---|---|---|---|---|
| 1* | ZSK 83 | 10000 | | | 130/145 | | 10,3 | 152 |
| 2* | DN 18 / ZSK 83 | 9000 | 2000 | 0,4 | 90 / 95 | 160 | 10,0 | 153 |
| 3* | DN 18 / ZSK 83 | 9000 | 2000 | 0,4 | 155 / 185 | 200 | a) | a) |
| 4* | DN 32 /Welding | 5500 | 140 | 5,5 | 170 / 170 | 230 | a) | a) |
| 5 | DN 18 / Welding | 5500 | 1300 | 0,6 | 180 / 200 | 285 | 9,9 | 143 |
| 6 | DN 4 / Continua | 70 | 1000 | 0,3 | 180 / 180 | 280 | 10,1 | 139 |
| 7 | DN 18, DN 18 / ZSK 83 | 9100 | 2000 | 0,4 | 190/180 | 282 | 10,8 | 143 |

\* nicht erfindungsgemäßes Vergleichsbeispiel

a) Statikmischer nach 30 min zugewachsen; keine kontinuierliche TPU-Herstellung möglich

Von allen Produkten erhielt man homogene Blasfolien.

Bei Einhaltung aller Parameter des erfindungsgemäßen Statikmischer-Verfahrens (Temperatur, Scherrate und Verweilzeit) werden Produkte erhalten, die im Vergleich zu den nach dem normalen ZSK-Verfahren hergestellten Produkten bei gleichen mechanischen Eigenschaften bei Raumtemperatur und bei gleich guter Folien-Homogenität eine deutlich herabgesetzte Erweichungstemperatur besitzen.

Dieses Aufschmelzverhalten ist vorteilhaft, insbesondere für den TPU-Schmelzfolien- und Sinterbereich.

**Patentansprüche**

1.  Verfahren zur kontinuierlichen Herstellung thermoplastisch verarbeitbarer homogener Polyurethanelastomere mit verbessertem Erweichungsverhalten, bei dem
    ein oder mehrere Polyisocyanate (A) und
    eine zerewitinoffaktive Wasserstoffatome aufweisende Mischung (B) aus

    B1) 1 bis 85 Äquivalent-%, bezogen auf die Isocyanatgruppen in (A), einer oder mehrerer Verbindungen mit im Mittel mindestens 1,8 und höchstens 2,2 zerewitinoffaktiven Wasserstoffatomen pro Molekül und einem mittleren Molekulargewicht $\overline{M}_n$ von 450 bis 5000 g/mol,

    B2) 15 bis 99 Äquivalent-%, bezogen auf die Isocyanatgruppen in (A), einer oder mehrerer Kettenverlängerungsmittel mit im Mittel mindestens 1,8 und höchstens 2,2 zerewitinoffaktiven Wasserstoffatomen pro Molekül und einem Molekulargewicht von 60 bis 400 g/mol, sowie

    0-20 Gew.-%, bezogen auf die Gesamtmenge an TPU, weiterer Hilfs- und Zusatzstoffe (C),
    wobei die Komponenten A) und B) in einem NCO:OH-Verhältnis von 0,9 : 1 bis 1,1 : 1 eingesetzt werden, in einem Statikmischer mit einer Scherrate von >500 sec$^{-1}$ und <50 000 sec$^{-1}$ innerhalb von maximal 1 Sekunde homogen vermischt werden, die so hergestellte Reaktionsmischung, gegebenenfalls über einen zweiten Statikmischer, in einen Extruder dosiert wird und gegebenenfalls Hilfsstoffe und/oder weitere Komponenten eingemischt werden, **dadurch gekennzeichnet, dass** das Polyisocyanat (A) und die Mischung (B) jeweils eine Temperatur von >170°C und <250°C aufweisen, die Reaktion im wesentlichen im ersten Statikmischer mit einem Umsatz >90%, bezogen auf Komponente A), stattfindet und die Reaktionsmischung den ersten Statikmischer mit einer Temperatur >240°C und <350°C verlässt.

2.  Verfahren zur kontinuierlichen Herstellung thermoplastisch verarbeitbarer Polyurethanelastomere gemäß Anspruch 1, **dadurch gekennzeichnet, dass** die zerewitinoffaktive Wasserstoffatome enthaltende Verbindung B1) ein Polyesterdiol, Polyetherdiol, Polycarbonatdiol oder ein Gemisch aus diesen ist.

3.  Verfahren zur kontinuierlichen Herstellung thermoplastisch verarbeitbarer Polyurethanelastomere gemäß Anspruch 1, **dadurch gekennzeichnet, dass** die zerewitinoffaktive Wasserstoffatome enthaltende Verbindung B2) Ethylenglykol, Butandiol, Hexandiol, 1,4-Di-(β-hydroxyethyl)-hydrochinon und/oder 1,4-Di-(β-hydroxyethyl)-bisphenol A ist.

4.  Verfahren zur kontinuierlichen Herstellung thermoplastisch verarbeitbarer Polyurethanelastomere gemäß Anspruch 1, **dadurch gekennzeichnet, dass** das Polyisocyanat A) ein aromatisches Diisocyanat, insbesondere Diphenylmethandiisocyanat-Isomerengemisch mit einem 4,4'-Diphenylmethandiisocyanatgehalt von >96 Gew.-% ist.

5.  Verwendung der nach dem Verfahren gemäß den Ansprüchen 1 bis 4 hergestellten thermoplastischen Polyurethane zur Herstellung von Spritzgießartikeln und Extrusionsartikeln.

**Claims**

1.  Process for the continuous production of thermoprocessable homogeneous polyurethane elastomers having improved softening behaviour, in which
    one or more polyisocyanates (A) and
    a mixture (B) containing Zerewitinoff-active hydrogen atoms and comprising

B1) 1 to 85 equivalent %, referred to the isocyanate groups in (A), of one or more compounds containing on average at least 1.8 and at most 2.2 Zerewitinoff-active hydrogen atoms per molecule and having a mean molecular weight $\overline{M}_n$ of 450 to 5000 g/mole,

B2) 15 to 99 equivalent %, referred to the isocyanate groups in (A), of one or more chain extension agents containing on average at least 1.8 and at most 2.2 Zerewitinoff-active hydrogen atoms per molecule and having a molecular weight $\overline{M}_n$ of 60 to 400 g/mole, as well as

0 to 20 wt.%, referred to the total amount of thermoprocessable polyurethane, of further auxiliary substances and additives (C),
the components (A) and (B) being used in an NCO:OH ratio of 0.9:1 to 1.1:1,
are homogeneously mixed in a static mixer at a shear rate of >500 sec$^{-1}$ and <50,000 sec$^{-1}$ within at most 1 second, the reaction mixture thereby produced is metered into an extruder, optionally via a second static mixer, and auxiliary substances and/or further components are optionally mixed in, **characterised in that** the polyisocyanate (A) and the mixture (B) in each case have a temperature of >170°C and <250°C, the reaction takes place substantially in a first static mixer with a conversion rate >90% referred to component (A), and the reaction mixture leaves the first static mixer at a temperature of >240°C and <350°C.

2. Process for the continuous production of thermoprocessable polyurethane elastomers according to claim 1, **characterised in that** the compound B1) containing Zerewitinoff-active hydrogen atoms is a polyester diol, polyether diol, polycarbonate diol or a mixture of these.

3. Process for the continuous production of thermoprocessable polyurethane elastomers according to claim 1, **characterised in that** the compound B2) containing Zerewitinoff-active hydrogen atoms is ethylene glycol, butanediol, hexanediol, 1,4-di-(β-hydroxyethyl)-hydroquinone and/or 1,4-di-(β-hydroxyethyl)-bisphenol A.

4. Process for the continuous production of thermoprocessable polyurethane elastomers according to claim 1, **characterised in that** the polyisocyanate (A) is an aromatic diisocyanate, in particular a diphenylmethane diisocyanate isomer mixture with a 4,4'-diphenylmethane diisocyanate content of >96 wt.%.

5. Use of the thermoplastic polyurethanes produced by the process according to claims 1 to 4 for the production of injection-moulded articles and extrusion articles.

**Revendications**

1. Procédé de préparation en continu d'élastomères polyuréthannes homogènes façonnables sous forme thermoplastique avec un comportement de ramollissement amélioré, dans lequel
un ou plusieurs polyisocyanates (A), et
un mélange (B) présentant des atomes d'hydrogène actifs selon Zerewitinoff, de

B1) 1 à 85% en équivalents, sur base des radicaux isocyanate dans (A), d'un ou de plusieurs composés avec en moyenne, au moins 1,8 et au maximum 2,2 atomes d'hydrogène actifs selon Zerewitinoff par molécule et un poids moléculaire moyen $\overline{M}_n$ allant de 450 à 5000 g/mole ;
B2) 15 à 99% en équivalents, sur base des radicaux isocyanate dans (A), d'un ou de plusieurs agents d'allongement de chaine avec en moyenne, au moins 1,8 et au maximum 2,2 atomes d'hydrogène actifs selon Zerewitinoff par molécule et un poids moléculaire allant de 60 à 400 g/mole, ainsi que

0-20% en poids, sur base de la teneur totale en TPU, d'autres auxiliaires et additifs (C),
où les composants A) et B) sont mis en oeuvre en un rapport NCO:OH allant de 0,9:1 à 1,1:1,
mélangés de manière homogène en maximum 1 seconde, dans un mélangeur statique avec une vitesse de cisaillement de > 500 sec$^{-1}$ et < 50 000 sec$^{-1}$, le mélange réactionnel ainsi préparé, est ajouté de manière dosée dans une extrudeuse le cas échéant à l'aide d'un deuxième mélangeur statique, et le cas échéant, on introduit les auxiliaires et/ou autres composants, **caractérisé en ce que** le polyisocyanate (A) et le mélange (B) présentent chacun une température > 170°C et < 250°C, la réaction se produit essentiellement dans le premier mélangeur statique avec une transformation > 90%, sur base du composant A), et le mélange réactionnel quitte le premier mélangeur statique avec une température > 240°C et < 350°C.

2. Procédé de préparation en continu d'élastomères polyuréthannes façonnables sous forme thermoplastique suivant la revendication 1, **caractérisé en ce que** le composé B1) contenant des atomes d'hydrogène actifs selon Zerewitinoff est un polyester-diol, un polyétherdiol, un polycarbonatediol ou un mélange de ceux-ci.

3. Procédé de préparation en continu d'élastomères polyuréthannes façonnables sous forme thermoplastique suivant la revendication 1, **caractérisé en ce que** le composé B2) contenant des atomes d'hydrogène actifs selon Zerewitinoff est l'éthylèneglycol, le butanediol, l'hexanediol, la 1,4-di(β-hydroxyéthyl)hydroquinone et/ou le 1,4-di(β- hydroxyéthyl)bisphénol A.

4. Procédé de préparation en continu d'élastomères polyuréthannes façonnables sous forme thermoplastique suivant la revendication 1, **caractérisé en ce que** le polyisocyanate A) est un diisocyanate aromatique, en particulier un mélange d'isomères de diphénylméthane-diisocyanate avec une teneur en 4,4'-diphénylméthane-diisocyanate > 96% en poids.

5. Utilisation des polyuréthannes thermoplastiques préparés suivant le procédé des revendications 1 à 4, pour la préparation d'articles moulés par injection et d'articles moulés par extrusion.